# EUROPEAN PATENT APPLICATION

(11) **EP 4 001 466 A1**
(43) Date of publication of application: **25.05.2022**
(21) Application number: 20207793.9
(22) Date of filing: 16.11.2020
(51) Int. Cl.: C25B 1/04, C25B 9/00, C25B 9/67, C25B 15/08

(54) **ELECTROLYSIS ARRANGEMENT**

(71) Applicant: L'Air Liquide Société Anonyme pour l'Etude et l'Exploitation des Procédés Georges Claude, 75321 Paris (FR)
(72) Inventor: COMBES, Gary, 60439 Frankfurt am Main (DE); BEHR, Alexander, 60439 Frankfurt am Main (DE); BROCHARD, Antoine, 92150 Suresnes (FR)
(74) Representative: Schwenderling, Jens

(57) **Abstract**

Electrolysis arrangement (1) comprising:
- a main enclosure (2),
- an external module (3) outside of the main enclosure (2),
- multiple stacks (4) of electrolysis cells, wherein the stacks (4) are configured to obtain an anode product and a cathode product by electrolysis of a medium, and wherein the stacks (4) are arranged on a primary level (5) of the main enclosure (2),
- at least one transformer (7) and at least one rectifier (16) configured to provide electrical energy to the stacks (4), wherein the at least one transformer (7) is arranged on the primary level (5) of the main enclosure (2),
- an anode separator (8) connected to the stacks (4) and configured to separate the anode product from the medium,
- a cathode separator (9) connected to the stacks (4) and configured to separate the cathode gaseous product from the medium, and
- a pump unit (10) for driving the medium, wherein the pump unit (10) is arranged within the external module (3).

The electrolysis arrangement (1) has a layout with a particularly small footprint, particularly short bus bar lengths, a particularly small volume for controlled climate regulation and particularly small ATEX zones. Thereby, the electrolysis arrangement (1) allows cost efficient construction and energy efficient operation.

## Description

The invention is directed to an electrolysis arrangement.

On an industrial scale, electrolysis is usually performed using stacks of electrolysis cells. Each of the electrolysis cells has an anode and a cathode, between which a voltage is applied. Each of the stacks are equipped with a transformer, a rectifier and further equipment referred to as the balance of stack. Usually, the stacks and the equipment connected thereto are arranged within the same building. Known layouts of electrolysis arrangements require significant space within such a building. This does not only cause significant costs for the building itself. Moreover, a large building requires a significant volume of climate control for maintaining the operating climate. Also, some parts of the electrolysis arrangement have to be placed within an ATEX rated zone because explosive gases are handled. Known layouts have large ATEX rated zones, which further increases costs for extraction.

The object of the invention is to improve the prior art so that an electrolysis arrangement with a more compact layout is obtained.

The object is solved with the electrolysis arrangement according to the independent claim. Advantageous refinements are presented in the dependent claims. The features described in the claims and in the description can be combined with each other in any technologically reasonable manner.

According to the invention an electrolysis arrangement is presented that comprises:
- a main enclosure,
- an external module outside of the main enclosure,
- multiple stacks of electrolysis cells, wherein the stacks are configured to obtain an anode product and a cathode product by electrolysis of a medium, and wherein the stacks are arranged within the main enclosure on a primary level,
- at least one transformer and at least one rectifier configured to provide electrical energy to the stacks, wherein the at least one transformer is arranged on an elevation equal to that of the primary level of the main enclosure,
- an anode separator connected to the stacks and configured to separate the anode product from the medium,
- a cathode separator connected to the stacks and configured to separate the cathode product from the medium, and
- a pump unit for driving the medium, wherein the pump unit is arranged within the external module.

The electrolysis arrangement can be used for electrolysis of a medium. Preferably, the medium is liquid, in particular water. The medium may contain dissolved salts such as KOH for alkaline electrolysis or electrolysis using anion exchange membrane cells. The electrolysis products are preferably gaseous. In the case of water, hydrogen and oxygen can be obtained as the electrolysis products. The electrolysis arrangement is intended to be used for an industrial scale electrolysis. For example, it is preferred that at least one of the electrolysis products is obtained at a rate of 250 to 1500 Nm³ per hour per stack. This applies, in particular, to the production of hydrogen in the case of water electrolysis. The electrolysis is preferably performed in an automated way.

The electrolysis arrangement comprises multiple stacks. Preferably, the electrolysis arrangement comprises 2 to 16 stacks, in particular 2, 4 or 8 stacks. The stacks can also be referred to as electrolysis stacks. Within the stack the electrolysis of the medium can be performed using the electrolysis cells. Thereby, an anode product and a cathode product are obtained. In the case of water as the medium the anode product is oxygen and the cathode product is hydrogen. The anode product and the cathode product can be extracted from the stack. Thereby, however, the products will be mixed with the medium.

Preferably, the stacks each have a maximum rated DC power consumption in the range of 1 to 20 MW, in particular in the range of 3 to 10 MW. The described electrolysis arrangement is preferably used for industrial scale electrolysis. In particular, this is to be understood in contrast to experimental setups on a laboratory scale. The industrial scale can be quantified in terms of the maximum rated DC power consumption of the stacks. The maximum rated DC power consumption is what is commonly used to describe the electrolysis stacks. For example, a "5 MW stack" has a maximum rated DC power consumption of 5 MW.

The electrolysis arrangement further comprises an anode separator and a cathode separator. The following description applies to both the anode separator and the cathode separator. The separators are configured for separating the electrolysis products from the medium. If a mixture of the product and the medium is provided to the separator, the mixture is separated within the separator such that only the medium is provided at a separator medium outlet and only the product is provided at a separator product outlet. The medium is preferably liquid, while the products are preferably gaseous. The separators are hence preferably configured as gas/liquid separators. The anode separator and the cathode separator are preferably not connected to each other except for indirect connections via the separator outlets and/or via the separator inlets. The separators are connected to all stacks. That is, all stacks share the same anode separator and the same cathode separator. This does not preclude the electrolysis arrangement from comprising further stacks connected to a further anode separator and a further cathode separator.

The electrolysis arrangement further comprises at least one transformer and at least one rectifier that are configured for providing electrical energy to the stacks. It is preferred that each of the stacks has a respective transformer and a respective rectifier. That is, there is one transformer and one rectifier per stack. However, it is also possible that a transformer and a rectifier are connected to more than one stack. For example, a pair of a transformer and a rectifier can be connected to two or four of the stacks. It is preferred that the transformers and rectifiers are arranged in pairs that each form a respective unit. The transformers and rectifiers of a unit are preferably arranged within a common housing.

The medium is driven by at least one pump unit. The pump unit comprises one or more pumps. The pump unit preferably has a variable flow. That is, the flow of the medium generated by the pump unit can be controlled, for example, by controlling the rotation speed of at least one pump of the pump unit. In case there are multiple pump units, it is preferred that the flows of the medium generated by the pump units can be controlled independently of each other.

The electrolysis arrangement comprises a main enclosure and an external module. The main enclosure is preferably a building. In that case the main enclosure can be referred to as a main building. The main enclosure can be obtained by building a new building or can be obtained by refurbishing an existing building. The main enclosure preferably has a base plate a roof and walls that enclose a space. The external module is arranged outside of the main enclosure. The external module can be arranged adjacent to the main enclosure or spaced apart from the main enclosure.

The stacks are arranged within the main enclosure on a primary level of the main enclosure. The primary level is preferably a ground level of the main enclosure. Instead of the term "level" also the term "story" could be used, in particular in case the main enclosure is a building. The term "level" is not to be understood as a level in a mathematical sense, but rather as a section of the main enclosure that has a certain height. Preferably, each level has a respective height of 3 to 8 m. The term "primary level" is supposed to be understood in contrast to other levels such as a secondary level.

The at least one transformer is arranged on an elevation that is equal to the elevation of the primary level. Preferably, the at least one transformer is arranged within the main enclosure. In that case the at least one transformer is arranged on the primary level of the main enclosure. However, it is possible for the at least one transformer to be arranged outside the main enclosure. In that case the at least one transformer is not considered to be arranged on the primary level because the primary level is defined only within the main enclosure. Nevertheless, the at least one transformer is arranged on what would be the primary level of the main enclosure if the primary level of the main enclosure was defined outside the main enclosure.

The at least one rectifier is preferably arranged within the main enclosure, in particular isolated from the stacks for fire safety. In particular, the transformer and the rectifier can be separated from each other by means of a partition element. The partition element is preferably fire resistant. Preferably the at least one rectifier is arranged on a secondary level, wherein the secondary level is elevated with respect to the primary level. It was found that in particular due to the arrangement of the rectifier on the secondary level it is possible for the main enclosure to be supported by pylons. In particular, modules of 4 to 6 pylons each can be used to obtain the main enclosure. In an alternatively preferred embodiment, the at least one rectifier is arranged on an elevation that is equal to the elevation of the primary level.

The pump unit is arranged within the external module. This facilitates maintenance in that an operator does not have to enter an ATEX zone in order to access the pump unit.

It was found that due to the described arrangement the lengths of electrical wires and conduits for connecting the elements of the electrolysis arrangement are particularly short. This can be described as having a particularly short bus bar length. This does not only save investment costs, but also reduces energy losses. This is achieved due to a particularly short distance from the stacks to the transformer and the rectifier. Also, it was found that the volume that is to be air-conditioned is considerably smaller. This is, in particular, due to separation of the external module from the main enclosure because it is sufficient to air-condition the main enclosure. Herein, the term "air-conditioning" is supposed to mean that the climate is controlled. This can include heating and/or cooling. An air-conditioning installation can comprise hot water heaters and/or forced air ventilation. The air-conditioning installation can be adapted to the volume that is supposed to be air-conditioned. Thereby, costs for the air-conditioning installation can be minimized.

Due to the described configuration the electrolysis arrangement has a particularly small footprint. Thereby, the electrolysis arrangement is particularly suitable for brownfield sites. Brownfield sites are those that are already built upon, and often are space constrained.

According to a preferred embodiment the electrolysis arrangement further comprises at least one electrical switchgear unit and/or at least one PLC unit arranged within the main enclosure on a secondary level, wherein the secondary level is elevated with respect to the primary level. The "and" case is preferred.

The secondary level is preferably arranged on top of the primary level. In the present embodiment the at least one electrical switchgear unit and the at least one PLC unit are arranged on the secondary level, preferably not directly above the stacks.

The at least one electrical switchgear unit and the at least one PLC unit can be lighter than the transformer(s) and rectifier(s). Hence, it was found that the at least one electrical switchgear unit and the at least one PLC unit can be placed on the secondary level. This reduces the footprint of the electrolysis arrangement, while still allowing short distances between the elements of the electrolysis arrangement.

It is preferred that each of the stacks has a respective electrical switchgear unit and a respective PLC unit. That is, there is one electrical switchgear unit and one rectifier per stack. However, it is also possible that an electrical switchgear unit and/or a PLC unit are connected to more than one stack. For example, a pair of an electrical switchgear unit and a PLC unit can be connected to two or four of the stacks. It is preferred that the electrical switchgear units and PLC units are arranged in pairs that each form a respective unit.

According to a further preferred embodiment the electrolysis arrangement further comprises at least one filter for filtering the medium and/or at least one heat exchange unit for controlling a temperature of the medium, wherein the filter and/or the heat exchange unit are arranged within the external module. The filter can be used to remove undesired substances from the medium.

It is preferred that the electrolysis arrangement comprises at least one filter and at least one heat exchange unit. In that case it is preferred that the at least one filter and the at least one heat exchange unit are arranged within the external module.

Placing the filter and/or the heat exchange unit outside the main enclosure within the external module reduces the required volume of the main enclosure. This reduces the size of ATEX zones and the volume that is supposed to be air-conditioned. Preferably, the filter and/or the heat exchange unit are arranged on an elevation that is equal to the elevation of the primary level of the main enclosure. Having the filter and/or the heat exchange unit arranged outside the main enclosure facilitates maintenance in that an operator does not have to enter an ATEX zone in order to access the filter and/or the heat exchange unit. In addition, placing the heat exchange unit outside the main enclosure can facilitate cooling, in particular if the environmental temperature is low. Also, it is possible to use an air cooling installation as the heat exchange unit. Due to significant noise generated by air cooling installations it would be disadvantageous to use an air cooling installation within the main enclosure.

According to a further preferred embodiment the electrolysis arrangement further comprises a header for separating the medium provided by the pump unit into a respective flow for each of the stacks, wherein the header is arranged within the main enclosure.

Placing the header outside the main enclosure within the external module reduces the required volume for the main enclosure. This reduces the size of ATEX zones and the volume that is supposed to be air-conditioned. Preferably, the header is arranged on an elevation that is equal to the elevation of the primary level of the main enclosure. This does not mean that the header has to be arranged at the bottom of the primary level. It is possible for the header to be arranged at any height that falls within the primary level. Alternatively, the header can be arranged on an elevation that is equal to the elevation of the secondary level of the main enclosure. The header is preferably attached to the pylons of the main enclosure.

According to a further preferred embodiment of the electrolysis arrangement the external module is moveable. The means for moving the module may be by crane, mobile (wheeled) gantry crane, mobile self-propelled modular lifting platforms, or via attachments with wheeled dollies suitably placed on the module or via rail.

For maintenance purposes it is desired that the elements of the electrolysis arrangement are accessible. For example, it is preferred that the stacks can be moved out of the main enclosure. To that end, the external module should not interfere with the maintenance of the stacks. In the present embodiment such interference can be avoided by moving the external module. In operation, the external module is preferably stationary in an operation position. In order to move the external module out of the operating position, connections form the external module to the main enclosure can be disconnected. Since the external module can be moved out of the operation position for maintenance purposes, the operation position can be particularly close to the main enclosure in a space that would be required to be empty for moving a stack out of the main enclosure. Hence, having the external module configured in a movable manner reduces the footprint of the electrolysis arrangement.

According to a further preferred embodiment of the electrolysis arrangement the anode separator and/or the cathode separator are arranged within the main enclosure on a secondary level, wherein the secondary level is elevated with respect to the primary level. The "and" case is preferred.

Having the separators arranged within the main enclosure reduces the lengths of conduits between the separators and the stacks.

According to a further preferred embodiment of the electrolysis arrangement the anode separator and/or the cathode separator are arranged above at least one of the stacks. The "and" case is preferred.

The fact that the anode separator and/or the cathode separator are arranged above at least one of the stacks means that the in a top view of the electrolysis arrangement the anode separator and/or the cathode separator overlap with at least one of the stacks. This is a particularly compact arrangement that reduces the footprint of the main enclosure. Preferably, the anode separator and/or the cathode separator are arranged perpendicularly to the stacks. This means that an axis of the anode separator is perpendicular to a respective axis of the stacks and/or that an axis of the cathode separator is perpendicular to a respective axis of the stacks.

According to a further preferred embodiment of the electrolysis arrangement the anode separator and/or the cathode separator are arranged outside of the main enclosure. The "and" case is preferred.

The anode separator and/or the cathode separator are preferably arranged in between the main enclosure and the external module. Having the anode separator and/or the cathode separator arranged outside of the main enclosure can reduce the volume that is supposed to be air-conditioned and the size of ATEX zones. Having the separators arranged outside the main enclosure facilitates maintenance in that an operator does not have to enter an ATEX zone in order to access the separators.

According to a further preferred embodiment of the electrolysis arrangement the external module is configured as a shelter.

The term "shelter" is supposed to be understood as an auxiliary building. The shelter can also be referred to as a shack or hut. Preferably, the shelter has a base plate, a roof and walls that enclose a space. Preferably, the walls are made of sheet steel, wood, plastic or nylon. The walls could also be configured as a poorly permeable barrier to solid material or animals. The shelter is configured to protect the elements of the electrolysis arrangement within the external module from environmental influences such as environmental deleterious (eg. Leaves, dust, sand), wind, rain and snow. It is not necessary for the shelter to be thermally isolated.

According to a further preferred embodiment of the electrolysis arrangement the external module is configured in a roofless manner.

The elements arranged within the external module can be configured to withstand environmental influences such as wind, rain and snow. Thereby, the external module does not require a roof, which reduces costs.

According to a further preferred embodiment of the electrolysis arrangement the stacks, the at least one transformer, the at least one rectifier, the anode separator and the cathode separator are configured in a modular manner.

In this embodiment the stacks, the transformer(s), the rectifier(s) and the separators form respective modules. The modules can be arranged in various ways. Thereby, the layout of the electrolysis arrangement can easily be adapted to boundary conditions such as available space. Also, the layout of the electrolysis arrangement can be changed particularly easily, for example if further stacks are supposed to be added to an existing electrolysis arrangement.

According to a further preferred embodiment of the electrolysis arrangement the stacks are movable out of the main enclosure. The means for moving the stacks may be by crane with roof panels removed, mobile self-propelled modular lifting platforms, or via attachments with wheeled dollies suitably placed on the stacks or via rail.

In particular for maintenance purposes it is preferred to be able to move the stacks out of the main enclosure. In the present embodiment this can be done particularly easily due to the rails.

According to a further preferred embodiment of the electrolysis arrangement the electrolysis cells are configured as PEM electrolysis cells, anion exchange membrane electrolysis cells or alkaline electrolysis cells.

It was found that in particular using these electrolysis cells the described advantages can be obtained. PEM electrolysis cells are particularly preferred. In this case as well as in the case of anion exchange membrane electrolysis cells the medium is water, in particular de-ionised water. In case of alkaline electrolysis cells the medium is an aqueous solution of potassium hydroxide (KOH). Anion exchange membrane electrolysers can also operate in a medium of mild caustic solutions, nominally of KOH solution.

According to a further preferred embodiment the electrolysis arrangement further comprises a ventilation installation arranged within the main enclosure and configured for providing a ventilation flow within the main enclosure, wherein the ventilation flow comprises a first component originating outside the main enclosure and a second component originating at the at least one rectifier.

The ventilation installation can be used to air-condition at least a part of the main enclosure. Therefore, a ventilation flow is generated by the ventilation installation. The ventilation flow is preferably a flow of a gas, in particular of air. The ventilation installation is preferably configured for adjusting the temperature of the ventilation flow to a set value.

In the following the invention will be described with respect to the figures. The figures show preferred embodiments, to which the invention is not limited. The figures and the dimensions shown therein are only schematic. The figures show:
- Fig. 1:: a circuit layout of an electrolysis arrangement according to the invention,
- Fig. 2:: a first side view of a first embodiment of an electrolysis arrangement according to Fig. 1,
- Fig. 3:: a top view of the electrolysis arrangement of Fig. 2,
- Fig. 4:: a second side view of the electrolysis arrangement of Fig. 2,
- Fig. 5:: a side view of a second embodiment of an electrolysis arrangement according to Fig. 1,
- Fig. 6:: a top view of the electrolysis arrangement of Fig. 5,
- Fig. 7:: a side view of a third embodiment of an electrolysis arrangement according to Fig. 1,
- Fig. 8:: a first side view of a fourth embodiment of an electrolysis arrangement according to Fig. 1, and
- Fig. 9:: a second side view of the electrolysis arrangement of Fig. 8.

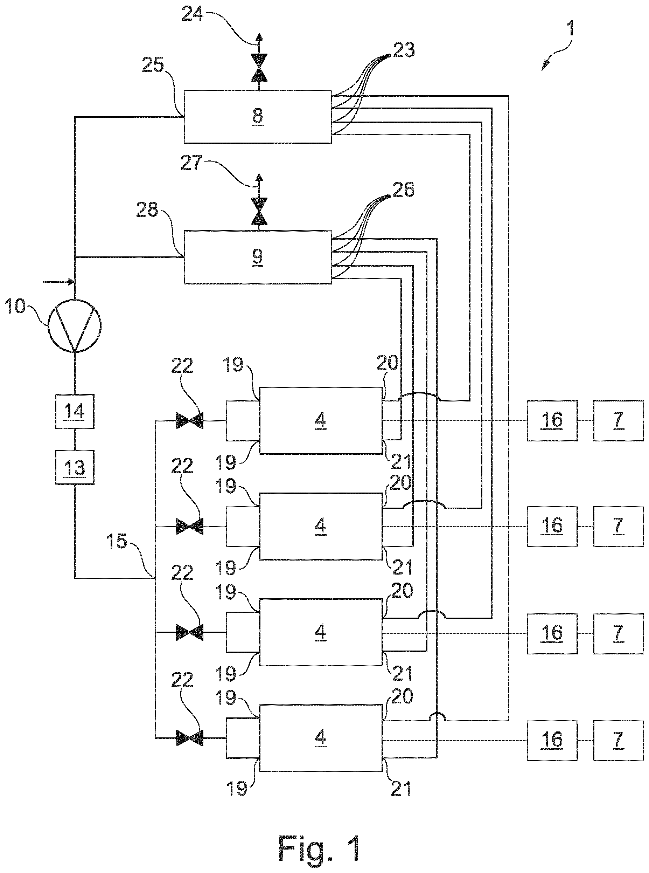

Fig. 1 shows an electrolysis arrangement 1 that comprises multiple stacks 4 of electrolysis cells. The electrolysis cells may be configured as PEM electrolysis cells, anion exchange membrane electrolysis cells or alkaline electrolysis cells. The stacks 4 each have a maximum rated DC power consumption in the range of 1 to 20 MW. Each of the stacks 4 is connected to a respective rectifier 16 and a respective transformer 7. Also, the electrolysis arrangement 1 comprises a pump unit 10 for driving a medium. The pump unit 10 has a single centrifugal pump configured to provide an adjustable flow of the medium. Each stack 4 comprises two stack inlets 19 that are connected to the pump unit 10 via a header 15 for separating a flow of the medium provided by the pump unit 10 into a respective flow for each of the stacks 4. Between the pump unit 10 and the header 15 a heat exchange unit 14 and a filter 13 are arranged. Further, each stack 4 comprises a respective anode outlet 20 and a respective cathode outlet 21. The stacks 4 are configured to obtain by electrolysis of the medium introduced into the respective stack inlets 19 an anode product provided together with the medium at the respective anode outlet 20 and a cathode product provided together with the medium at the respective cathode outlet 21.

Further, the electrolysis arrangement 1 comprises a respective control valve 22 for each of the stacks 4 arranged between the header 15 and the respective stack inlets 19, wherein the control valves 22 are configured to individually control a flow of the medium into the respective stack 4.

The electrolysis arrangement 1 further comprises an anode separator 8 having an anode separator medium outlet 25 that is connected to the pump unit 10. Each of the anode outlets 20 of the stacks 4 is connected to a respective anode separator inlet 23 of the anode separator 8. The anode separator 8 is configured to separate the anode product from the medium introduced into the anode separator inlets 23 such that the anode product is provided at an anode separator product outlet 24 and the medium is provided at the anode separator medium outlet 25. The electrolysis arrangement 1 further comprises a cathode separator 9 having a cathode separator medium outlet 28 that is connected to the pump unit 10. Each of the cathode outlets 21 of the stacks 4 is connected to a respective cathode separator inlet 26 of the cathode separator 9. The cathode separator 9 is configured to separate the cathode product from the medium introduced into the cathode separator inlets 26 such that the cathode product is provided at a cathode separator product outlet 27 and the medium is provided at the cathode separator medium outlet 28.

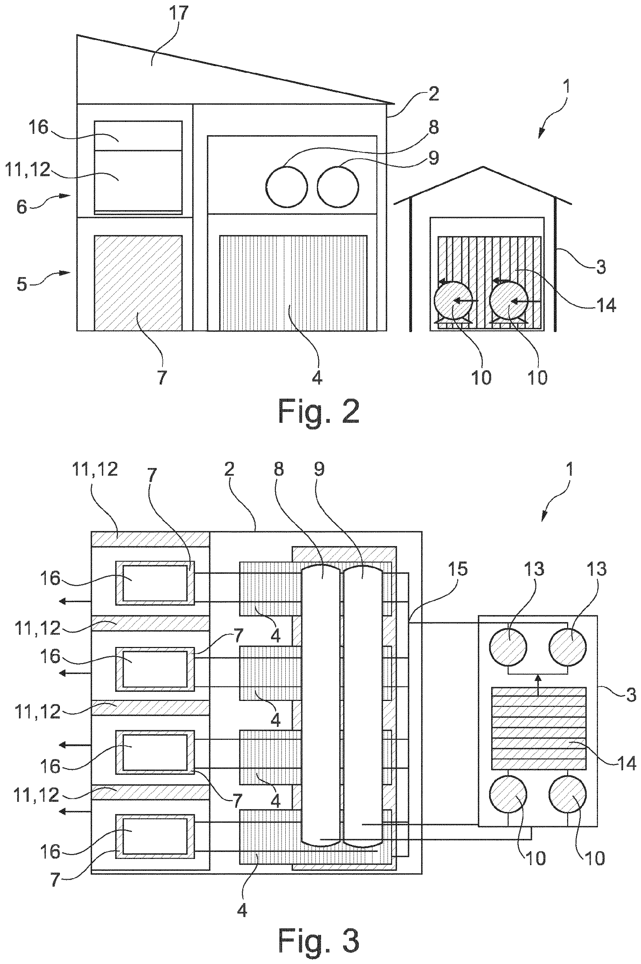

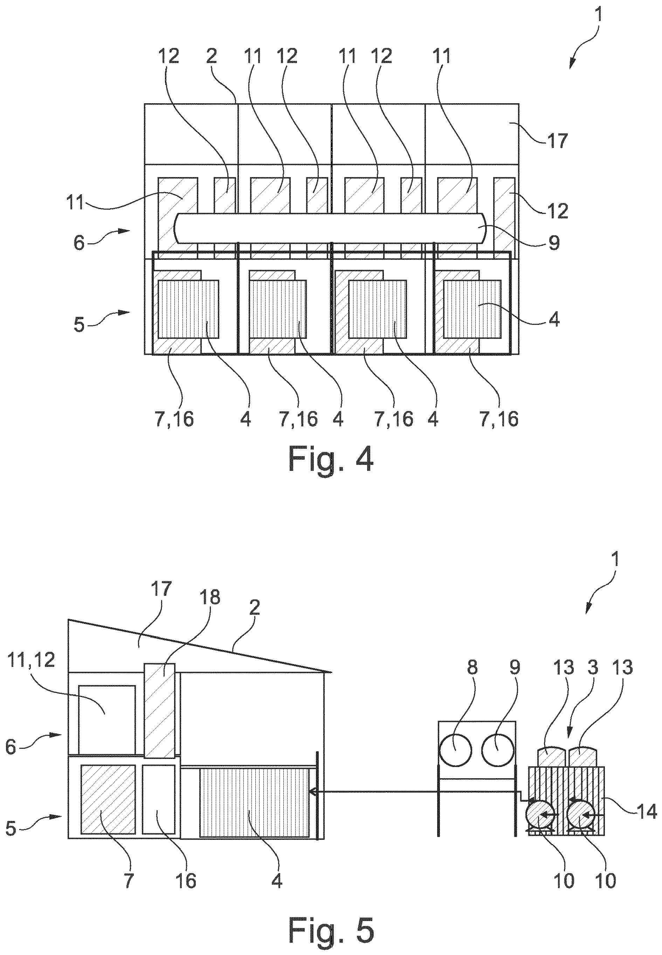

Fig. 2 to 4 show a first embodiment of an electrolysis arrangement 1 according to Fig. 1. Fig. 2 and 4 show side views of the electrolysis arrangement 1 from directions that are perpendicular to each other. The electrolysis arrangement 1 comprises a main enclosure 2 and an external module 3 outside of the main enclosure 2. The main enclosure 2 has a primary level 5 and a secondary level 6. Above the secondary level 6 the main enclosure 2 has a void 17. The external module 3 is movable and configured as a shelter. The stacks 4, the transformers 7 and the header 15 are arranged within the main enclosure 2 on the primary level 5. The rectifiers 16 are arranged within the main enclosure 2 on the secondary level 5. The anode separator 8 and the cathode separator 9 are arranged within the main enclosure 2 on the secondary level 6 above the stacks 4. The electrolysis arrangement 1 further comprises, for each of the stacks 4, a respective electrical switchgear unit 11 and a respective PLC unit 12 (not shown in Fig. 1). The electrical switchgear units 11 and the PLC units 12 are arranged within the main enclosure 2 on the secondary level 6. The electrolysis arrangement 1 comprises (in contrast to the simplified schematic of Fig. 1) two pump units 10 and two filters 13. The heat exchange units 14 is configured as a gasket heat exchanger. The pump units 10, the filters 13 and the heat exchange units 14 are arranged within the external module 3. The stacks 4, the transformers 7, the rectifiers 16, the anode separator 8 and the cathode separator 9 are configured in a modular manner. The transformers 7 can be moved out of the main enclosure 2 as indicated by arrows.

The embodiment shown in Fig. 2 to 4 is particularly compact. Only a particularly small volume is supposed to be air-conditioned. The pipe lengths from the stack outlets 20,21 to the anode separator 8 and to the cathode separators 9 are uniform and as short as possible. With the external module 3 being movable it is still possible to access the stacks 4. The separator 8,9 can also be moveable in case the separators 8,9 need maintenance. Thereby, it is not necessary that the separators 8,9 can be moved (except, e.g., by crane). A further advantage is that the stacks 4 can be jacked up and removed once decoupled from the bus bars and hydraulic lines. For example, the stacks 4 can be rolled out of the main enclosure 2 on rails or rollers.

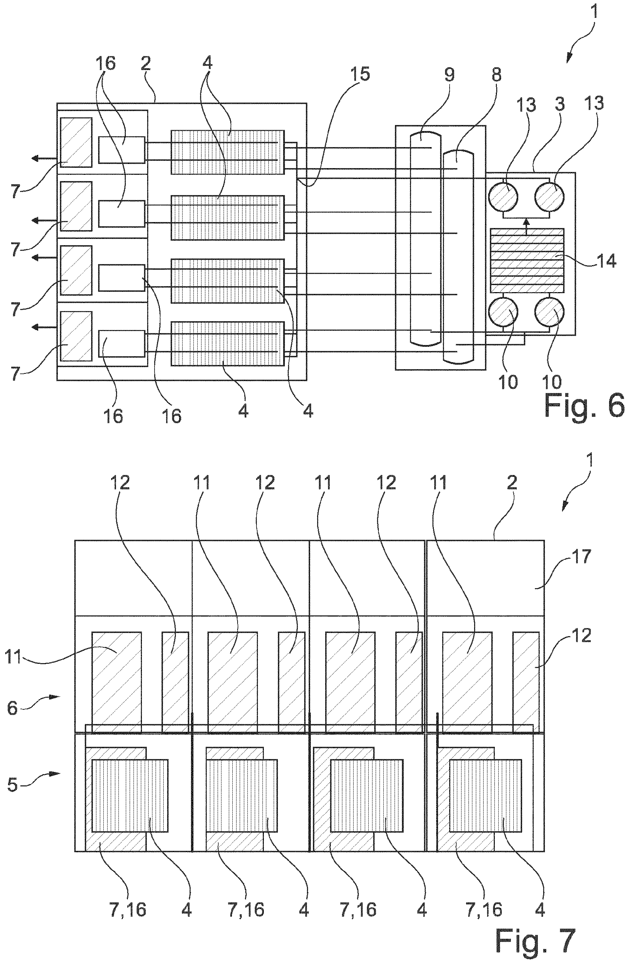

Fig. 5 and 6 show a second embodiment of an electrolysis arrangement 1 according to Fig. 1. Although the embodiments shown in Fig. 2 to 4 and in Fig. 5 and 6 are different, both embodiments are realizations of what is shown schematically in Fig 1. This is possible because Fig. 1 is a schematic circuit layout only.

The external module 3 is movable and, in contrast to Fig. 2 to 4, configured in a roofless manner. The stacks 4, the transformers 7, the rectifiers 16 and the header 15 are arranged within the main enclosure 2 on the primary level 5. The anode separator 8 and the cathode separator 9 are arranged outside of the main enclosure 2. The electrolysis arrangement 1 further comprises for each of the stacks 4 a respective electrical switchgear unit 11 and a respective PLC unit 12 (not shown in Fig. 1). The electrical switchgear units 11 and the PLC units 12 are arranged within the main enclosure 2 on the secondary level 6. The electrolysis arrangement 1 comprises (in contrast to the simplified schematic of Fig. 1) two pump units 10 as well as two filters 13 and two heat exchange units 14. The pump units 10, the filters 13 and the heat exchange units 14 are arranged within the external module 3. The stacks 4, the transformers 7, the rectifiers 16, the anode separator 8 and the cathode separator 9 are configured in a modular manner. Within the main enclosure 2 an HVAC ventilation duct 18 is provided that is connected to the void 17.

The embodiment of Fig. 5 and 6 is particularly useful in case space is less of an issue, an existing building is height limited or the transformers 7 and rectifiers 16 are water cooled. In this embodiment the separators 8,9 are in close proximity to the external module 3. Also, the stacks 4 are located as close to the rectifiers 16 as possible.

Fig. 7 shows a third embodiment of an electrolysis arrangement 1 according to Fig. 1. It can be seen that the transformers 7, the rectifiers 16 and the stacks 4 are arranged on the primary level 6 and that the electrical switchgear units 11 and the PLC units 12 are arranged on the secondary level 6 below the void 17.

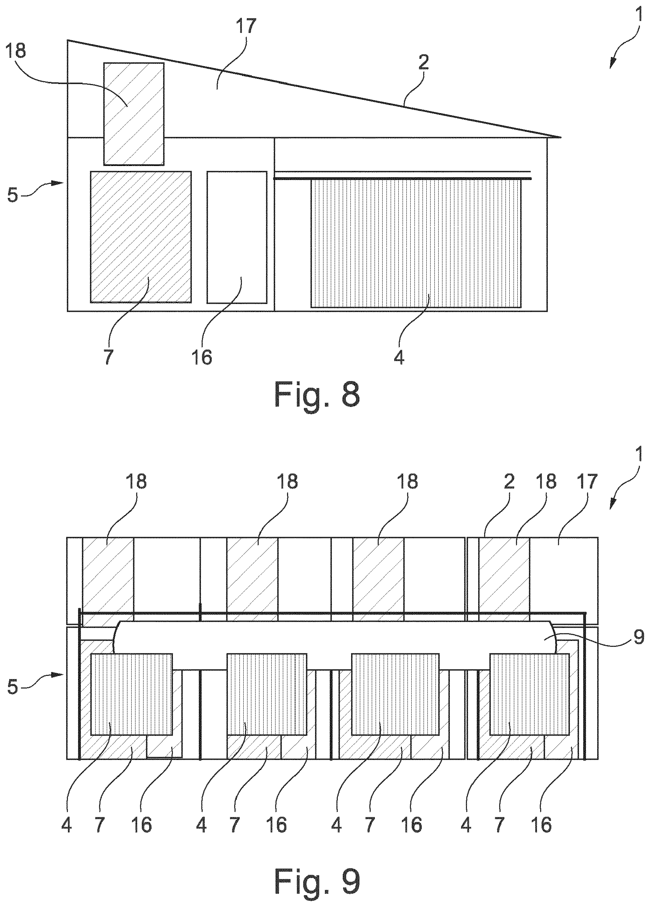

Fig. 8 and 9 show a fourth embodiment of an electrolysis arrangement 1 according to Fig. 1. Fig. 8 and 9 show side views of the electrolysis arrangement 1 from directions that are perpendicular to each other. It can be seen that the main enclosure 2 has only a primary level 5 with a void 17 above. It can be seen that the stacks 4, the transformers 7, the separators 8,9 and the rectifiers 16 are arranged on the primary level 5 and that an HVAC ventilation duct 18 is arranged within the void 17.

The electrolysis arrangement (1) has a layout with a particularly small footprint, particularly short bus bar lengths, a particularly small volume for controlled climate regulation and particularly small ATEX zones. Thereby, the electrolysis arrangement (1) allows cost efficient construction and energy efficient operation.

### List of reference numerals

- 1: electrolysis arrangement
- 2: main enclosure
- 3: external module
- 4: stack
- 5: primary level
- 6: secondary level
- 7: transformer
- 8: anode separator
- 9: cathode separator
- 10: pump unit
- 11: electrical switchgear unit
- 12: PLC unit
- 13: filter
- 14: heat exchange unit
- 15: header
- 16: rectifier
- 17: void
- 18: HVAC ventilation duct
- 19: stack inlet
- 20: anode outlet
- 21: cathode outlet
- 22: control valve
- 23: anode separator inlet
- 24: anode separator product outlet
- 25: anode separator medium outlet
- 26: cathode separator inlet
- 27: cathode separator product outlet
- 28: cathode separator medium outlet

## Claims

1. Electrolysis arrangement (1) comprising:
- a main enclosure (2),
- an external module (3) outside of the main enclosure (2),
- multiple stacks (4) of electrolysis cells, wherein the stacks (4) are configured to obtain an anode product and a cathode product by electrolysis of a medium, and wherein the stacks (4) are arranged within the main enclosure (2) on a primary level (5),
- at least one transformer (7) and at least one rectifier (16) configured to provide electrical energy to the stacks (4), wherein the at least one transformer (7) is arranged on an elevation equal to that of the primary level (5) of the main enclosure (2),
- an anode separator (8) connected to the stacks (4) and configured to separate the anode product from the medium,
- a cathode separator (9) connected to the stacks (4) and configured to separate the cathode product from the medium, and
- a pump unit (10) for driving the medium, wherein the pump unit (10) is arranged within the external module (3).

2. Electrolysis arrangement (1) according to claim 1, further comprising at least one electrical switchgear unit (11) and/or at least one PLC unit (12) arranged within the main enclosure (2) on a secondary level (6), wherein the secondary level (6) is elevated with respect to the primary level (5).

3. Electrolysis arrangement (1) according to any of the preceding claims, further comprising at least one filter (13) for filtering the medium and/or at least one heat exchange unit (14) for controlling a temperature of the medium, wherein the at least one filter (13) and/or the at least one heat exchange unit (14) for cooling are arranged within the external module (3).

4. Electrolysis arrangement (1) according to any of the preceding claims, further comprising a header (15) for separating the medium provided by the pump unit (10) into a respective flow for each of the stacks (4), wherein the header (15) is arranged within the main enclosure (2).

5. Electrolysis arrangement (1) according to any of the preceding claims, wherein the external module (3) is moveable.

6. Electrolysis arrangement (1) according to any of the preceding claims, wherein the anode separator (8) and/or the cathode separator (9) are arranged within the main enclosure (2) on a secondary level (6), wherein the secondary level (6) is elevated with respect to the primary level (5).

7. Electrolysis arrangement (1) according to claim 6, wherein the anode separator (8) and/or the cathode separator (9) are arranged above at least one of the stacks (4).

8. Electrolysis arrangement (1) according to one of the claims 1 to 5, wherein the anode separator (8) and/or the cathode separator (9) are arranged outside of the main enclosure (2).

9. Electrolysis arrangement (1) according to any of the preceding claims, wherein the external module (3) is configured as a shelter.

10. Electrolysis arrangement (1) according to one of the claims 1 to 9, wherein the external module (3) is configured in a roofless manner.

11. Electrolysis arrangement (1) according to any of the preceding claims, wherein the stacks (4), the at least one transformer (7), the at least one rectifier (16), the anode separator (8) and the cathode separator (9) are configured in a modular manner.

12. Electrolysis arrangement (1) according to any of the preceding claims, wherein the stacks (4) are movable on rails or out of the main enclosure (2).

13. Electrolysis arrangement (1) according to any of the preceding claims, wherein the electrolysis cells are configured as PEM electrolysis cells, anion exchange membrane electrolysis cells or alkaline electrolysis cells.

14. Electrolysis arrangement (1) according to any of the preceding claims, further comprising a ventilation installation arranged within the main enclosure (2) and configured for providing a ventilation flow within the main enclosure (2), wherein the ventilation flow comprises a first component originating outside the main enclosure (2) and a second component originating from the at least one rectifier enclosure (16).
